# EUROPÄISCHE PATENTSCHRIFT

(11) **EP 3 564 450 B1**
(45) Veröffentlichungstag und Bekanntmachung des Hinweises auf die Patenterteilung: **15.07.2020**
(21) Anmeldenummer: 19171145.6
(22) Anmeldetag: 25.04.2019
(51) Int. Cl.: E03C 1/04, B05B 1/18, B05B 1/30, B05B 1/16, F16K 11/052, F16K 15/03

(54) **BRAUSEKOPF MIT FLUIDDRUCKBETÄTIGTEM VENTIL**
SHOWER HEAD WITH FLUID PRESSURE-CONTROLLED VALVE
POMME DE DOUCHE À SOUPAPE ACTIONNÉE PAR PRESSION DE FLUIDE

(30) Priorität: 30.04.2018 DE 102018206683
(43) Veröffentlichungstag der Anmeldung: 06.11.2019
(73) Patentinhaber: Hansgrohe SE, 77761 Schiltach (DE)
(72) Erfinder: Melle, Fabian, 77799 Ortenberg (DE)
(74) Vertreter: Patentanwälte Ruff, Wilhelm, Beier, Dauster & Partner mbB

(56) Entgegenhaltungen:
- WO-A1-2014/121693
- CN-Y- 201 209 265
- DE-A1-102013 222 132
- DE-B3-102012 213 518

## Beschreibung

Die Erfindung bezieht sich auf einen Brausekopf nach dem Oberbegriff des Patentanspruchs 1. Brauseköpfe dieser Art sind beispielsweise als sanitäre Duschbrauseköpfe verwendbar.

Ein solcher Brausekopf umfasst einen Brausekopfkörper, einen Fluideinlass in den Brausekopfkörper und eine Strahlscheibe an einer Austrittsseite des Brausekopfkörpers, wobei die Strahlscheibe eine Mehrzahl von Strahlaustrittsöffnungen aufweist. Im Brausekopfkörper sind mindestens eine erste Verteilkammer und eine zweite Verteilkammer gebildet, wobei eine erste Gruppe der Strahlaustrittsöffnungen mit der ersten Verteilkammer in ausmündender Fluidverbindung steht und eine zweite Gruppe der Strahlaustrittsöffnungen mit der zweiten Verteilkammer in ausmündender Fluidverbindung steht. Eine erste Fluidführung erstreckt sich vom Fluideinlass zur ersten Verteilkammer, und eine zweite Fluidführung erstreckt sich vom Fluideinlass zur zweiten Verteilkammer. Ein nutzerbetätigtes Umschaltventil ist zur steuerbaren Freigabe der ersten Fluidführung und Absperrung der zweiten Fluidführung oder Freigabe der zweiten Fluidführung und Absperrung der ersten Fluidführung eingerichtet.

Zwischen der ersten und der zweiten Verteilkammer ist ein fluiddruckbetätigtes Ventil angeordnet, das nach Art eines Rückschlagventils durch einen Fluiddruck in der ersten Verteilkammer eine Schließstellung einnimmt und durch einen Fluiddruck in der zweiten Verteilkammer eine Öffnungsstellung einnimmt. Mit dem Ventil ist beabsichtigt, den Brausekopf mit relativ geringem Aufwand wahlweise in einer ersten Betriebsart, in der Fluid aus der ersten aber nicht aus der zweiten Gruppe der Strahlaustrittsöffnungen austritt, oder einer zweiten Betriebsart betreiben zu können, in der Fluid aus beiden Gruppen der Strahlaustrittsöffnungen austritt. Anders ausgedrückt, dieser Brausekopf ermöglicht auf Wunsch vom Benutzer steuerbar eine wahlweise Zuschaltung der zweiten Gruppe von Strahlaustrittsöffnungen zur ersten Gruppe von Strahlaustrittsöffnungen, um in einer gewünschten Weise einen entsprechenden, aus der Strahlscheibe und damit aus dem Brausekopf austretenden Brausestrahl zu bilden. Zusätzlich können je nach Bedarf eine oder mehrere weitere Gruppen von jeweils gemeinsam mit Fluid beaufschlagbaren Strahlaustrittsöffnungen nebst jeweils zugehöriger Verteilkammer und Fluidführung vom Fluideinlass bzw. vom Umschaltventil zur betreffenden Verteilkammer vorgesehen sein.

Ein Brausekopf der eingangs genannten Art ist in der Patentschrift EP 2 692 448 B1 offenbart. Beim dortigen Brausekopf beinhaltet das fluiddruckbetätigte Ventil eine verformbare Dichtlippe, die in Kooperation mit einer starren Rippe, die an einem Zwischenboden des Brausekopfkörpers ausgebildet ist, eine Begrenzungswandung zwischen der ersten und der zweiten Verteilkammer bildet. Die Dichtlippe ist Teil einer an der Innenseite der Strahlscheibe angebrachten Auskleidung aus einem Elastomermaterial, an der gleichzeitig Strahlaustrittsnippel für die Strahlaustrittsöffnungen angeformt sind. Bei Freigabe der Fluidführung zur dort ringförmigen zweiten Verteilkammer gelangt das Fluid zunächst in den entsprechenden Ringraum der zweiten Verteilkammer und dann von dort über die durch den Fluiddruck in der zweiten Verteilkammer in Öffnungsstellung verformte Dichtlippe in die radial nach innen angrenzende erste Verteilkammer längs der gesamten kreisbogenförmigen Erstreckung der Dichtlippe.

Ein weiterer Brausekopf der eingangs genannten Art ist in der Offenlegungsschrift DE 10 2013 222 132 A1 offenbart. Beim dortigen Brausekopf beinhaltet das fluiddruckbetätigte Ventil ein Rückschlagventilelement, das von einem an einer Trennwand zwischen den beiden Verteilkammern gehaltenen Pilzkopfelement mit einem elastischen Pilzkopf-Dichtrand gebildet ist. Das Rückschlagventilelement ist hierbei in einem Überlappungsbereich angeordnet, in welchem die eine Verteilkammer auf der der Strahlscheibe abgewandten Seite der anderen Verteilkammer über die Trennwand angrenzt. Die zur zweiten Verteilkammer gehörige Fluidführung mündet in diese in einem radial inneren Bereich der zweiten Verteilkammer seitlich abgelegen von der Position des Rückschlagventilelements.

Der Erfindung liegt als technisches Problem die Bereitstellung eines Brausekopfs der eingangs genannten Art zugrunde, der gegenüber dem oben erwähnten Stand der Technik Vorteile hinsichtlich Funktion und/oder Fertigungsaufwand bietet.

Die Erfindung löst dieses Problem durch die Bereitstellung eines Brausekopfs mit den Merkmalen des Anspruchs 1. Bei diesem Brausekopf ist das fluiddruckbetätigte Ventil ein Klappenventil mit einer schwenkbeweglich gelagerten, starren Ventilklappe, die in einem Bereich einer Begrenzungswandung zwischen der ersten und der zweiten Verteilkammer angeordnet ist, wobei dieser Bereich der Begrenzungswandung einem Eintrittsbereich der zweiten Fluidführung in die zweite Verteilkammer gegenüberliegt. Mit der so ausgeführten Ventilklappe lässt sich der Brausekopf funktionell vorteilhaft betreiben und mit relativ geringem Aufwand fertigen.

Die schwenkbeweglich gelagerte, starre Ventilklappe lässt sich relativ einfach fertigen und montieren, und die Schwenkbewegung dieses starren Elements ist verschleißarm und unterliegt keiner verformungsbedingten Materialermüdung. Durch seine dem Eintrittsbereich der zweiten Fluidführung in die zweite Verteilkammer gegenüberliegende Positionierung kann die Ventilklappe direkt von dem der zweiten Verteilkammer zugeführten Fluid angeströmt und dadurch funktionssicher in seine Öffnungsstellung verschwenkt werden, wenn der Benutzer durch entsprechendes Einstellen des Umschaltventils die Fluidzufuhr zur zweiten Verteilkammer freigibt.

Über das geöffnete Klappenventil kann das Fluid sehr rasch außer in die zweite Verteilkammer zusätzlich in die erste Verteilkammer gelangen, was einen weitestgehend gleichzeitigen Fluiddruckaufbau und die Bereitstellung eines im Wesentlichen gleichen Fluiddruckniveaus in den beiden Verteilkammern begünstigt. Letzteres wiederum begünstigt eine ggf. gewünschte Erzielung einer im Wesentlichen gleichen Strahlcharakteristik für die Teilstrahlen, welche durch die erste bzw. die zweite Gruppe der Strahlaustrittsöffnungen für den insgesamt gebildeten Brausestrahl bereitgestellt werden. Dies beugt unerwünschten Effekten vor, bei denen das Fluid aus einer der beiden Gruppen von Strahlaustrittsöffnungen mit deutlich geringerem Fluiddruck als aus der anderen Gruppe der Strahlaustrittsöffnungen austritt.

In einer Weiterbildung der Erfindung verschließt die Ventilklappe eine Ventilöffnung in der Begrenzungswandung zwischen der ersten und der zweiten Verteilkammer, und vom Eintrittsbereich in die zweite Verteilkammer erstreckt sich zur Ventilöffnung ein Klappenanströmkanal mit einer rohrförmigen Kanalwandung, die mindestens eine seitliche Austrittsöffnung zur zweiten Verteilkammer aufweist. Ein solcher Klappenanströmkanal unterstützt vorteilhaft eine direkte Fluidanströmung des schwenkbeweglichen Klappenelements, um dieses in seine Öffnungsstellung zu verschwenken. Die eine oder mehreren seitlichen Austrittsöffnungen sorgen gleichzeitig dafür, dass die zweite Verteilkammer in strömungstechnisch günstiger Weise mit dem zuzuführenden Fluid in gewünschter Menge versorgt wird.

In einer Ausgestaltung der Erfindung weist der Klappenanströmkanal in Richtung der Ventilöffnung eine Verengung auf. Dies bedeutet, dass der Klappenanströmkanal in einem an die Ventilöffnung angrenzenden Abschnitt einen geringeren Kanalquerschnitt aufweist als in einem an den Eintrittsbereich der zweiten Fluidführung in die zweite Verteilkammer angrenzenden Abschnitt. Eine solche Dimensionierung des Klappenanströmkanals kann weitergehend das direkte Anströmen der Ventilklappe in Kombination mit einer optimalen Fluidversorgung sowohl der ersten als auch der zweiten Verteilkammer begünstigen.

In einer Ausgestaltung der Erfindung erstreckt sich der Klappenanströmkanal geradlinig vom Eintrittsbereich in die zweite Verteilkammer bis hin zur Ventilöffnung. Dies stellt eine strömungstechnisch günstige Maßnahme für die Fluidanströmung der Ventilklappe und für eine Minimierung von Turbulenzeffekten der Fluidströmung dar.

In einer Weiterbildung der Erfindung ist das Klappenelement durch eine Clips-, Rast-oder Schnappverbindung schwenkbeweglich am Brausekopfkörper gehalten. Dies stellt eine fertigungs- und montagetechnisch vorteilhafte Realisierung der Schwenkhalterung für die Ventilklappe dar. Bei Bedarf kann die Verbindung lösbar ausgeführt sein, so dass dann die Ventilklappe bei Bedarf z.B. für Wartungsarbeiten demontiert werden kann.

In einer Weiterbildung der Erfindung beinhaltet die Ventilklappe einen Klappengrundkörper aus einem Hartkunststoffmaterial und einen an den Klappengrundkörper angespritzten Dichtkörper aus einem Weichkunststoffmaterial, z.B. einem Silikonmaterial, wobei der Dichtkörper in der Schließstellung der Ventilklappe eine Ventilöffnung des Klappenventils vollständig abdeckt. In dieser Ausführung ist die Ventilklappe z.B. durch Anspritzen des Dichtkörpers an den Klappengrundkörper mittels eines entsprechenden Kunststoffanspritzprozesses oder Kunststoffspritzgießprozesses oder durch eine 3D-Drucktechnik herstellbar, und mittels des Dichtkörpers kann die Ventilklappe die Ventilöffnung in der Schließstellung zuverlässig und funktionssicher geschlossen halten.

In einer Weiterbildung der Erfindung ist die zweite Verteilkammer als eine die erste Verteilkammer ganz oder teilweise umgebende Ringkammer ausgebildet. Damit kann die zweite Gruppe von Strahlaustrittsöffnungen einen entsprechend ringförmigen Brauseteilstrahl bereitstellen, der zu dem von der ersten Gruppe von Strahlaustrittsöffnungen bereitgestellten Brauseteilstrahl vom Benutzer auf Wunsch zugeschaltet werden kann, um einen entsprechenden gesamten Brausestrahl zu bilden.

In einer Weiterbildung der Erfindung ist im Brausekopfkörper eine weitere, dritte Verteilkammer vorgesehen, mit der entsprechend eine dritte Gruppe der Strahlaustrittsöffnungen in ausmündender Fluidverbindung steht. Eine dritte Fluidführung führt in diesem Fall vom Fluideinlass zur dritten Verteilkammer. Das Umschaltventil ist dann zusätzlich zur steuerbaren Freigabe und Absperrung der dritten Fluidführung eingerichtet. Dabei kann die Steuerung der dritten Fluidführung in einer gewünschten Kombination zur Steuerung der ersten und der zweiten Fluidführung oder unabhängig von selbiger realisiert sein. Zum gesamten Brausestrahl können in dieser Ausführung je nach Wunsch des Benutzers z.B. nur die erste Gruppe, nur die erste und zweite Gruppe, nur die dritte Gruppe, nur die erste und dritte Gruppe oder alle drei Gruppen von Strahlaustrittsöffnungen beitragen.

In einer Ausgestaltung der Erfindung bildet die dritte Verteilkammer eine mittige Verteilkammer des Brausekopfs. Die erste und die zweite Verteilkammer bilden in diesem Fall außermittige Verteilkammern, die z.B. als jeweils ringförmige Kammern um die mittige Verteilkammer herum oder als in Umfangsrichtung benachbarte, kreissektorförmige Kammern etc. ausgebildet sein können.

In einer Ausgestaltung der Erfindung ist die erste Verteilkammer als eine die dritte Verteilkammer ganz oder teilweise umgebende Ringkammer ausgebildet. Dies stellt eine weitere, für entsprechende Anwendungen vorteilhafte Konfiguration des Brausekopfs zur Erzielung eines entsprechenden Strahlbildes des Brausestrahls bzw. einer entsprechenden Brausestrahlcharakteristik dar.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Draufsicht von unten auf einen Brausekopf,
- Fig. 2: eine perspektivische Explosionsansicht des Brausekopfs,
- Fig. 3: eine Perspektivansicht eines Grundkörpers des Brausekopfs,
- Fig. 4: eine Draufsicht von oben auf den Grundkörper,
- Fig. 5: eine Schnittansicht längs einer Linie IV-IV von Fig. 1 mit geschlossener Ventilklappe,
- Fig. 6: eine Detailansicht eines Bereichs VI von Fig. 5,
- Fig. 7: die Schnittansicht von Fig. 5 mit geöffneter Ventilklappe,
- Fig. 8: eine Schnittansicht längs einer Linie VIII-VIII von Fig. 7 und
- Fig. 9: eine Detailansicht eines Bereichs IX von Fig. 7.

Der gezeigte Brausekopf umfasst einen Brausekopfkörper 1, einen Fluideinlass 2 in den Brausekopfkörper 1 und eine Strahlscheibe 3 an einer Austrittsseite des Brausekopfkörpers 1, wobei die Strahlscheibe 3 eine Mehrzahl von Strahlaustrittsöffnungen 4 aufweist. Im Brausekopfkörper 1 sind eine erste Verteilkammer 5 und eine zweite Verteilkammer 6 ausgebildet. Mit der ersten Verteilkammer 5 steht eine erste Gruppe 4a von einer oder mehreren der Strahlaustrittsöffnungen 4 in ausmündender Fluidverbindung. Mit der zweiten Verteilkammer 6 steht eine zweite Gruppe 4b von einer oder mehreren der Strahlaustrittsöffnungen 4 in ausmündender Fluidverbindung.

Eine erste Fluidführung 7 führt vom Fluideinlass 2 zur ersten Verteilkammer 5. Eine zweite Fluidführung 8 führt vom Fluideinlass 2 zur zweiten Verteilkammer 6. Ein nutzerbetätigtes Umschaltventil 9 dient zur steuerbaren Freigabe der ersten Fluidführung 7 und Absperrung der zweiten Fluidführung 8, wenn es sich in einer entsprechenden ersten Umschaltstellung befindet, oder Freigabe der zweiten Fluidführung 8 und Absperrung der ersten Fluidführung 7, wenn es sich in einer entsprechenden zweiten Umschaltstellung befindet.

Der Brausekopf weist zudem ein fluiddruckbetätigtes Klappenventil 10 zwischen der ersten Verteilkammer 5 und der zweiten Verteilkammer 6 auf, wobei das Klappenventil 10 eine schwenkbeweglich gelagerte, starre Ventilklappe 11 beinhaltet. Das Klappenventil 10 bzw. speziell deren Ventilklappe 11 nimmt durch einen Fluiddruck in der ersten Verteilkammer 5 eine Schließstellung und durch einen Fluiddruck in der zweiten Verteilkammer 6 eine Öffnungsstellung ein. Die Ventilklappe 11 ist in einem Bereich 13a einer Begrenzungswandung 13 zwischen der ersten Verteilkammer 5 und der zweiten Verteilkammer 6 angeordnet, wobei dieser Bereich 13a der Begrenzungswandung 13 einem Eintrittsbereich 14 der zweiten Fluidführung 8 in die zweite Verteilkammer 6 gegenüberliegt.

Für das nutzerbetätigte Umschaltventil 9 ist ein beliebiges herkömmliches Umschaltventil verwendbar, wie es dem Fachmann für den vorliegenden Einsatzzweck an sich bekannt ist, der darin besteht, dass der Benutzer mit diesem Umschaltventil 9 ein über den Fluideinlass 2 zugeführtes Fluid wahlweise über die erste Fluidführung 7 oder die zweite Fluidführung 8 weiterleiten kann. Beispielsweise ist für das Umschaltventil 9 das gezeigte Umschaltventil vom Drucktastentyp verwendbar, wie es sich in entsprechenden marktgängigen Brauseköpfen der Anmelderin findet. Alternativ ist ein herkömmliches Umschaltventil anderen Typs mit gleicher Umschaltfunktion verwendet, z.B. eines Typs mit drehbeweglichem Bedienelement.

Im gezeigten Ausführungsbeispiel besitzt der Brausekopf eine von der Ventilklappe 11 verschließbare Ventilöffnung 15 in der Begrenzungswandung 13 zwischen der ersten Verteilkammer 5 und der zweiten Verteilkammer 6, und ein Klappenanströmkanal 16 erstreckt sich vom Eintrittsbereich 14 in die zweite Verteilkammer 6 zu der Ventilöffnung 15. Der Klappenanströmkanal 16 weist eine rohrförmige Kanalwandung 17 auf, die mindestens eine seitliche Austrittsöffnung 18 zur zweiten Verteilkammer 6 aufweist. Dies kann für viele Anwendungen strömungstechnisch von Vorteil sein, sowohl was den Aufbau eines ausreichenden Fluiddrucks auf die Ventilklappe 11 betrifft, um diese in ihre Öffnungsstellung zu verschwenken, als auch hinsichtlich einer günstigen Verteilung des zuströmenden Fluids auf die erste und die zweite Verteilkammer 5, 6 und einer Optimierung des Turbulenzverhaltens des Fluids. Im gezeigten Beispiel beinhaltet die Kanalwandung 17 zwei in einer Querrichtung gegenüberliegende bzw. beabstandete seitliche Austrittsöffnungen 18a, 18b. In alternativen Ausführungen besitzt die Kanalwandung 17 nur eine oder drei oder mehr seitliche Austrittsöffnungen, oder das Klappenventil 10 weist eine von der Ventilklappe 11 verschließbare Ventilöffnung auf, die sich nicht in der Begrenzungswandung 13 befindet, sondern z.B. im Inneren eines eigenen Gehäuses des entsprechend modifizierten Klappenventils 10. In weiteren alternativen Ausführungen weist das Klappenventil 10 keinen solchen Klappenanströmkanal 16 auf, z.B. in Ausführungen, bei denen das Fluid offen vom Eintrittsbereich 14 in der zweiten Verteilkammer 6 bzw. durch diese hindurch zur Ventilklappe 11 strömt.

In einer entsprechenden Ausführungsform besitzt der Klappenanströmkanal 16, wie gezeigt, in Richtung der Ventilöffnung 15 eine Verengung 16a. Dies kann zusätzlich den Fluiddruckaufbau für die Ventilklappe 11 und das Überströmen bzw. Zuströmen des Fluids von der zweiten Verteilkammer 6 in die erste Verteilkammer 5 unterstützen. In alternativen Ausführungen ist der Klappenanströmkanal 16 ohne eine solche Verengung konfiguriert, z.B. mit einem entlang seiner Längserstreckung konstant bleibenden Durchströmquerschnitt.

In einer vorteilhaften Ausführung erstreckt sich der Klappenanströmkanal 16, wie gezeigt, geradlinig vom Eintrittsbereich 14 in die zweite Verteilkammer 6 zur Ventilöffnung 15. Auch dies kann den Fluiddruckaufbau für die Ventilklappe 11 und das Überströmen bzw. Zuströmen des Fluids von der zweiten Verteilkammer 6 in die erste Verteilkammer 5 unterstützen. In alternativen Ausführungen ist der Klappenanströmkanal 16 mit einem anderen Verlauf konfiguriert, z.B. mit einem mindestens abschnittweise bogenförmigen Verlauf.

In einer entsprechenden Ausführungsform ist die Ventilklappe 11, wie gezeigt, durch eine Clips-, Rast- oder Schnappverbindung 19 um eine Schwenkachse 12 schwenkbeweglich am Brausekopfkörper 1 gehalten. In alternativen Ausführungen ist die Ventilklappe 11 in anderer Weise um die Schwenkachse 12 schwenkbeweglich am Brausekopfkörper 1 gehalten, z.B. durch eine Schraubverbindung oder eine unlösbare Verbindung. Bei Wahl einer lösbaren Verbindung kann die Ventilklappe 11 z.B. für Wartungszwecke aus dem Brausekopf ausgebaut werden.

In einer entsprechenden Ausführungsform beinhaltet die Ventilklappe 11, wie gezeigt, einen Klappengrundkörper 11a aus einem Hartkunststoffmaterial und einen an der Klappengrundkörper 11a z.B. durch Anspritzen oder eine 3D-Drucktechnik angeformten Dichtkörper 11b aus einem Weichkunststoffmaterial. Der Dichtkörper 11b deckt in der Schließstellung der Ventilklappe 11 die Ventilöffnung 15 des Klappenventils 10 vollständig ab. Damit lässt sich in konstruktiv einfacher Weise die gewünschte Ventilfunktion mit zuverlässigem Ventildichtverhalten realisieren. In alternativen Ausführungen ist die Ventilklappe 11 in anderer Weise realisiert, z.B. als homogen aus einem einzigen Material gefertigte Ventilklappe 11, wobei ein gewünschtes Abdichtverhalten in der Schließstellung durch dieses Material und/oder durch das Material des angrenzenden Randes der Ventilöffnung 15 bereitgestellt werden kann.

In einer entsprechenden Ausführungsform ist, wie gezeigt, die zweite Verteilkammer 6 als eine die erste Verteilkammer 5 ganz oder teilweise umgebende Ringkammer 6a ausgebildet. Dies dient zur Realisierung entsprechender Brausestrahlcharakteristika. In alternativen Ausführungen kann die zweite Verteilkammer 6 z.B. eine im Querschnitt kreisförmige, mittige Kammer sein und/oder ganz oder teilweise von der ersten Verteilkammer 5 ringförmig umgeben sein.

In einer entsprechenden Ausführungsform weist, wie im gezeigten Beispiel, der Brausekopf eine von der ersten Verteilkammer 5 und der zweiten Verteilkammer 6 getrennte dritte Verteilkammer 20 im Brausekopfkörper 1 auf, wobei mit der dritten Verteilkammer 20 eine dritte Gruppe 4c von einer oder mehreren der Strahlaustrittsöffnungen 4 in ausmündender Fluidverbindung steht. In diesem Fall führt eine von der ersten Fluidführung 7 und der zweiten Fluidführung 8 getrennte dritte Fluidführung 21 vom Fluideinlass 2 zur dritten Verteilkammer 20. Das Umschaltventil 9 ist in diesem Fall zusätzlich zur steuerbaren Freigabe und Absperrung der dritten Fluidführung 21 eingerichtet. Je nach Bedarf können in entsprechenden Ausführungen noch eine oder mehrere weitere Verteilkammern und zugehörige Fluidführungen sowie Gruppen von Strahlaustrittsöffnungen vorgesehen sein.

In einer entsprechenden Ausführung bildet, wie gezeigt, die dritte Verteilkammer 20 eine mittige Verteilkammer des Brausekopfs. Wie gezeigt, kann in diesem Fall die dritte Fluidführung 21 z.B. einen Zufuhrkanal 25 umfassen, der vom Umschaltventil 9 durch die zweite Verteilkammer 6, die Begrenzungswandung 13, die erste Verteilkammer 5 und eine Begrenzungswandung 26 zwischen der ersten Verteilkammer 5 und der dritten Verteilkammer 20 hindurch in die dritte Verteilkammer 20 führt. In alternativen Ausführungen ist die dritte Verteilkammer 20 außermittig angeordnet, z.B. als eine vollkreisringförmige oder teilkreisringförmige Verteilkammer.

In einer entsprechenden Ausführung ist die erste Verteilkammer 5, wie gezeigt, als eine die dritte Verteilkammer 20 ganz oder teilweise umgebende Ringkammer ausgebildet. In alternativen Ausführungen bildet sie keine ringförmige Kammer, sondern z.B. eine mittige Kammer, oder sie bildet eine Ringkammer, welche die dritte Verteilkammer 20 weder ganz noch teilweise umgibt, sondern z.B. von der dritten Verteilkammer 20 ganz oder teilweise umgeben wird.

Im gezeigten Ausführungsbeispiel beinhaltet der Brausekopf 1 einen Aufbau mit einem Grundkörper 1a, einem auf dessen Oberseite aufsetzbaren und beispielsweise mittels einer oder mehrerer Schraubverbindungen 22 fixierbaren Zwischenboden 1b und einem Außengehäusekörper 1c. Für eine Verwendung als Handbrause kann der Brausekopf 1 wie gezeigt einen Griffabschnitt 23 umfassen, der gleichzeitig als Fluideinlass 2 fungieren kann und von einem eigentlichen Kopfteil 24 des Brausekopfs 1 absteht.

Je nach Ausführung des Umschaltventils 9 kann der Benutzer mit ihm in entsprechenden Umschaltstellungen das über den Fluideinlass 2 zugeführte Fluid in variabler Weise auf die drei gezeigten Fluidführungen 7, 8, 21 aufteilen. So kann für die erwähnte erste Umschaltstellung je nach Wunsch vorgesehen sein, dass das Umschaltventil 9 die dritte Fluidführung 21 zusätzlich zu ersten Fluidführung 7 freigibt oder alternativ wie die zweite Fluidführung 8 absperrt. Analog kann das Umschaltventil 9 je nach Ausführung in der erwähnten zweiten Umschaltstellung die dritte Fluidführung 21 freigeben ober absperren. Je nach Ausführung kann das Umschaltventil 9 in einer oder mehreren weiteren Umschaltstellungen z.B. alle drei Fluidführungen 7, 8, 21 freigeben oder absperren. In einer speziellen Ventilausführung besitzt das Umschaltventil 9 drei Umschaltstellungen, in denen es jeweils eine der drei Fluidführungen 7, 8, 21 freigibt und die beiden anderen absperrt, sowie optional eine vierte und/oder fünfte Umschaltstellung zum gemeinsamen Absperren und/oder Freigeben aller drei Fluidführungen 7, 8 21.

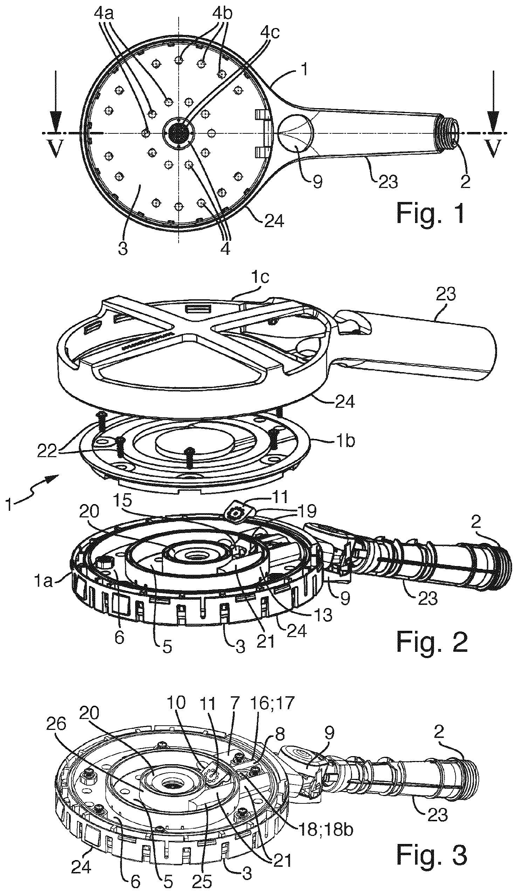

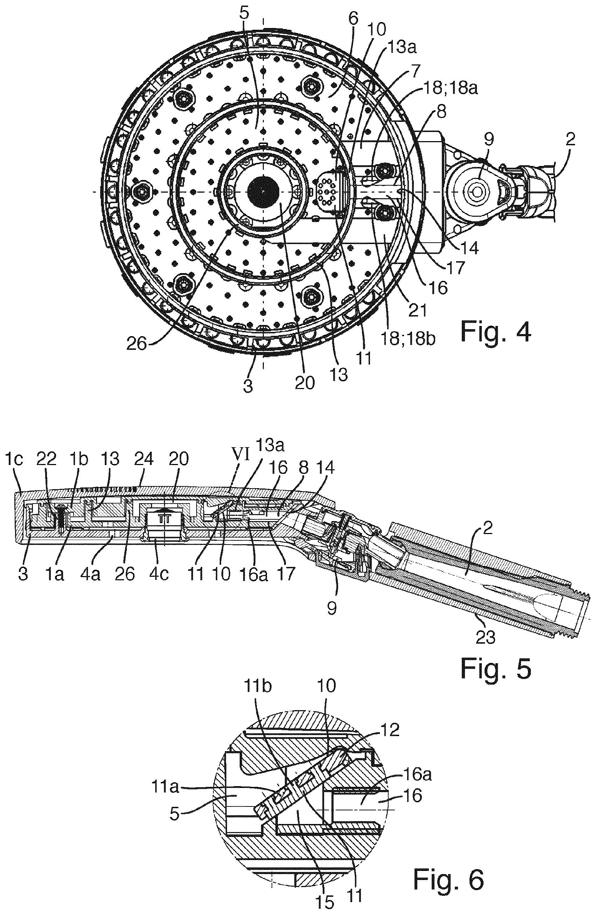

Wenn der Benutzer das Umschaltventil 9 in die erste Umschaltstellung steuert, ist die erste Fluidführung 7 freigegeben, und die zweite Fluidführung 8 ist abgesperrt. Folglich gelangt das über den Fluideinlass 2 zugeführte Fluid über die erste Fluidführung 7 in die erste Verteilkammer 5, jedoch nicht in die zweite Verteilkammer 6. Der sich dadurch in der ersten Verteilkammer 5 aufbauende Fluiddruck drückt die Ventilklappe 11 in ihre in den Fig. 3 bis 5 gezeigte Schließstellung, in der sie die Ventilöffnung 15 verschließt, da sich in der angrenzenden zweiten Verteilkammer 6 kein Fluiddruck aufbaut.

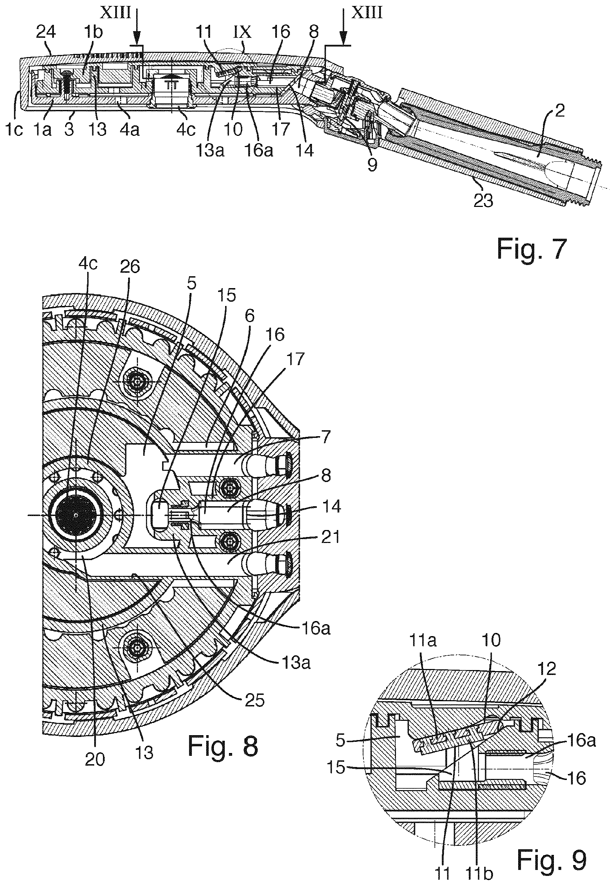

Wenn der Benutzer das Umschaltventil 9 in die zweite Umschaltstellung steuert, gelangt das über den Fluideinlass 2 zugeführte Fluid über die zweite Fluidführung 8 in die zweite Verteilkammer 6, jedoch nicht in die erste Fluidführung 9. Das Fluid tritt am Eintrittsbereich 14 über den Klappenanströmkanal 16 in die zweite Verteilkammer 6 ein, wobei es zum einen über die eine oder mehreren seitlichen Austrittsöffnungen 18 in den weiteren Bereich der zweiten Verteilkammer 6 außerhalb des Klappenanströmkanals 16 gelangt und zum anderen durch das Strömen entlang des Klappenanströmkanals 16 direkt auf die Ventilklappe 11 trifft. Durch diesen anströmenden Fluiddruck wird die Ventilklappe 11 in ihre in den Fig. 7 und 9 gezeigte Öffnungsstellung verschwenkt, da in der angrenzenden ersten Verteilkammer 5 kein entsprechender Fluidgegendruck vorliegt.

Über das geöffnete Klappenventil 10 gelangt das Fluid von der zweiten Verteilkammer 6 in die erste Verteilkammer 5, so dass das Fluid aus den beiden zugeordneten Gruppen 4a, 4b der Strahlaustrittsöffnungen 4 brausestrahlbildend austritt. Durch die erwähnte Fluidströmungsführung hält der Fluiddruck des die Ventilklappe 11 direkt anströmenden Fluids die Ventilklappe 11 bleibend in seiner Öffnungsstellung, auch nachdem sich die erste Verteilkammer 5 zusätzlich zur zweiten Verteilkammer 6 mit zugeführtem Fluid gefüllt hat, bis der Benutzer das Umschaltventil 9 in eine andere Umschaltstellung umsteuert, in welcher das Umschaltventil 9 die zweite Fluidführung 8 absperrt. Dann stoppt das direkte Anströmen der Ventilklappe 11 durch Fluid in der zweiten Fluidführung 8, und die Ventilklappe 11 kann in ihre Schließstellung zurückkehren. Bei Bedarf kann die Ventilklappe 11 z.B. mittels eines üblichen elastischen Rückstellelements, wie einer Rückstellfeder, in einer ihrer beiden Endstellungen vorgespannt gehalten sein, z.B. in ihrer Schließstellung.

Die erwähnte Fluidströmungsführung mit dem Klappenventil 10 ermöglicht zudem die Erzielung weitgehend gleicher Druckverhältnisse in der ersten und der zweiten Verteilkammer 5, 6 und damit eines sehr homogenen Strahlbildes für den gesamten Brausestrahl mit den beiden Brauseteilstrahlen der zugehörigen Gruppen 4a, 4b von Strahlaustrittsöffnungen 4. Das Fluid kann über das Klappenventil 10, das lokal im dem Eintrittsbereich 14 in die zweite Verteilkammer 6 gegenüberliegenden Bereich 13a der Begrenzungswandung 13 zwischen diesen beiden Verteilkammern 5, 6 angeordnet ist, mit relativ hoher Strömungsgeschwindigkeit in die erste Verteilkammer 5 strömen und sich dort zum Durchtritt durch die zugehörigen Strahlaustrittsöffnungen 4a hindurch verteilen. Mit gleichartiger Verteilcharakteristik kann das Fluid in die zweite Verteilkammer 6 strömen, z.B. über die eine oder mehreren seitlichen Austrittsöffnungen 18 der Kanalwandung 17, und und sich dort zum Durchtritt durch die zugehörigen Strahlaustrittsöffnungen 4b hindurch verteilen.

Wie die gezeigten und die weiteren oben erwähnten Ausführungsbeispiele deutlich machen, stellt die Erfindung einen Brausekopf zur Verfügung, der spezifische Vorteile hinsichtlich Funktion und Fertigungsaufwand bieten kann und dabei in einer funktionell zuverlässigen und vorteilhaften Weise mittels des Klappenventils ein Überströmen von zugeführtem Fluid direkt von einer Verteilkammer in eine weitere Verteilkammer einer Mehrzahl von Verteilkammern ermöglicht, denen jeweils eine Gruppe von einer oder mehreren brausestrahlbildenden Strahlaustrittsöffnungen der an der Austrittsseite des Brausekopfs angeordneten Strahlscheibe zugeordnet ist. Es versteht sich, dass der Brausekopf nicht nur für sanitäre Anwendungen, z.B. als sanitäre Hand- oder Kopfbrause, sondern auch für nicht-sanitäre Brauseanwendungen geeignet ist.

## Patentansprüche

1. Brausekopf, insbesondere sanitärer Duschbrausekopf, mit
- einem Brausekopfkörper (1),
- einem Fluideinlass (2) in den Brausekopfkörper,
- einer eine Mehrzahl von Strahlaustrittsöffnungen (4) aufweisenden Strahlscheibe (3) an einer Austrittsseite des Brausekopfkörpers,
- mindestens eine erste und eine zweite Verteilkammer (5, 6) im Brausekopfkörper, wobei eine erste Gruppe (4a) der Strahlaustrittsöffnungen mit der ersten Verteilkammer (5) und eine zweite Gruppe (4b) der Strahlaustrittsöffnungen mit der zweiten Verteilkammer (6) in ausmündender Fluidverbindung steht,
- einer ersten Fluidführung (7) vom Fluideinlass zur ersten Verteilkammer und einer zweiten Fluidführung (8) vom Fluideinlass zur zweiten Verteilkammer,
- einem nutzerbetätigten Umschaltventil (9) zur steuerbaren Freigabe der ersten Fluidführung und Absperrung der zweiten Fluidführung oder Freigabe der zweiten Fluidführung und Absperrung der ersten Fluidführung und
- einem fluiddruckbetätigten Ventil zwischen der ersten und der zweiten Verteilkammer, das durch einen Fluiddruck in der ersten Verteilkammer eine Schließstellung einnimmt und durch einen Fluiddruck in der zweiten Verteilkammer eine Öffnungsstellung einnimmt,
**dadurch gekennzeichnet, dass**
- das fluiddruckbetätigte Ventil ein Klappenventil (10) mit einer schwenkbeweglich gelagerten, starren Ventilklappe (11) ist, die in einem Bereich (13a) einer Begrenzungswandung (13) zwischen der ersten und der zweiten Verteilkammer (5, 6) angeordnet ist, der einem Eintrittsbereich (14) der zweiten Fluidführung (8) in die zweite Verteilkammer gegenüberliegt.

2. Brausekopf nach Anspruch 1, weiter **gekennzeichnet durch**
- eine von der Ventilklappe verschließbare Ventilöffnung (15) in der Begrenzungswandung zwischen der ersten und der zweiten Verteilkammer und
- einen sich vom Eintrittsbereich in die zweite Verteilkammer zu der Ventilöffnung erstreckenden Klappenanströmkanal (16) mit einer rohrförmigen Kanalwandung (17), die mindestens eine seitliche Austrittsöffnung (18) zur zweiten Verteilkammer aufweist.

3. Brausekopf nach Anspruch 2, weiter **dadurch gekennzeichnet, dass** der Klappenanströmkanal in Richtung der Ventilöffnung eine Verengung (16a) aufweist.

4. Brausekopf nach Anspruch 2 oder 3, weiter **dadurch gekennzeichnet, dass** sich der Klappenanströmkanal geradlinig vom Eintrittsbereich in die zweite Verteilkammer zur Ventilöffnung erstreckt.

5. Brausekopf nach einem der Ansprüche 1 bis 4, weiter **dadurch gekennzeichnet, dass** die Ventilklappe durch eine Clips-, Rast- oder Schnappverbindung (19) schwenkbeweglich am Brausekopfkörper gehalten ist.

6. Brausekopf nach einem der Ansprüche 1 bis 5, weiter **dadurch gekennzeichnet, dass** die Ventilklappe einen Klappengrundkörper (11a) aus einem Hartkunststoffmaterial und einen an den Klappengrundkörper angespritzten Dichtkörper (11b) aus einem Weichkunststoffmaterial aufweist, wobei der Dichtkörper in der Schließstellung der Ventilklappe eine Ventilöffnung (15) des Klappenventils vollständig abdeckt.

7. Brausekopf nach einem der Ansprüche 1 bis 6, weiter **dadurch gekennzeichnet, dass** die zweite Verteilkammer als eine die erste Verteilkammer ganz oder teilweise umgebende Ringkammer (6a) ausgebildet ist.

8. Brausekopf nach einem der Ansprüche 1 bis 7, weiter **gekennzeichnet durch**
- eine von der ersten und der zweiten getrennte dritte Verteilkammer (20) im Brausekopfkörper, mit der eine dritte Gruppe (4c) der Strahlaustrittsöffnungen in ausmündender Fluidverbindung steht, und
- eine von der ersten und der zweiten getrennte dritte Fluidführung (21) vom Fluideinlass zur dritten Verteilkammer,
- wobei das Umschaltventil zur steuerbaren Freigabe und Absperrung der dritten Fluidführung eingerichtet ist.

9. Brausekopf nach Anspruch 8, weiter **dadurch gekennzeichnet, dass** die dritte Verteilkammer eine mittige Verteilkammer des Brausekopfs bildet und/oder die erste Verteilkammer als eine die dritte Verteilkammer ganz oder teilweise umgebende Ringkammer ausgebildet ist.

## Claims

1. Shower head, preferably sanitary bath shower head, comprising
- a shower head body (1),
- a fluid inlet (2) into the shower head body,
- a jet disk (3) having a plurality of jet discharge openings (4) on a discharge side of the shower head body,
- at least one first and one second distribution chamber (5, 6) in the shower head body, wherein a first group (4a) of jet discharge openings is in outputting fluid communication with the first distribution chamber (5), and a second group (4b) of jet discharge openings is in outputting fluid communication with the second distribution chamber (6),
- a first fluid guidance (7) from the fluid inlet to the first distribution chamber and a second fluid guidance (8) from the fluid inlet to the second distribution chamber,
- a user-operated switch-over valve (9) for controllable unblocking of the first fluid guidance and blocking of the second fluid guidance or unblocking of the second fluid guidance and blocking of the first fluid guidance, and
- a fluid pressure-actuated valve between the first and the second distribution chambers, which valve assumes a closed position due to a fluid pressure in the first distribution chamber and assumes an open position due to a fluid pressure in the second distribution chamber,
**characterized in that**
- the fluid pressure-actuated valve is a flap valve (10) having a rigid, pivotably mounted valve flap (11) which is disposed in a region (13a) of a boundary wall (13) between the first and the second distribution chambers (5, 6), which region is opposed to an entry region (14) of the second fluid guidance (8) into the second distribution chamber.

2. Shower head according to claim 1, further **characterized by**
- a valve opening (15), capable of being closed by the valve flap, in the boundary wall between the first and the second distribution chambers, and
- a flap stream-in channel (16) which extends from the entry region into the second distribution chamber to the valve opening and comprises a tubular channel wall (17) including at least one lateral discharge opening (18) to the second distribution chamber.

3. Shower head according to claim 2, further **characterized in that** the flap stream-in channel has a constriction (16a) in the direction towards the valve opening.

4. Shower head according to claim 2 or 3, further **characterized in that** the flap stream-in channel extends in a straight line from the entry region into the second distribution chamber to the valve opening.

5. Shower head according to any one of claims 1 to 4, further **characterized in that** the valve flap is held pivotably on the shower head body by a clip joint, latching or snap-in connection (19).

6. Shower head according to any one of claims 1 to 5, further **characterized in that** the valve flap includes a flap base body (11a) made of a hard synthetic material and a sealing body (11b) injection-molded on the flap base body and made of a soft synthetic material, wherein the sealing body in the closed position of the valve flap completely covers a valve opening (15) of the flap valve.

7. Shower head according to any one of claims 1 to 6, further **characterized in that** the second distribution chamber is designed as an annular chamber (6a) surrounding the first distribution chamber completely or partially.

8. Shower head according to any one of claims 1 to 7, further **characterized by**
- a third distribution chamber (20) separate from the first and the second distribution chambers in the shower head body and a third group (4c) of jet discharge openings in outputting fluid communication with the third distribution chamber, and
- a third fluid guidance (21) from the fluid inlet to the third distribution chamber separate from the first and the second fluid guidance,
- wherein the switch-over valve is configured for controllable unblocking and blocking of the third fluid guidance.

9. Shower head according to claim 8, further **characterized in that** the third distribution chamber is a central distribution chamber of the shower head and/or the first distribution chamber is designed as an annular chamber surrounding the third distribution chamber completely or partially.

## Revendications

1. Pomme de douche, en particulier pomme de douche sanitaire, comportant
- un corps de pomme de douche (1),
- une entrée de fluide (2) dans le corps de pomme de douche,
- un disque à jet (3) présentant une pluralité d'ouvertures de sortie de jet (4) sur une face de sortie du corps de pomme de douche,
- au moins une première et une seconde chambre de répartition (5, 6) dans le corps de pomme de douche, un premier groupe (4a) des ouvertures de sortie de jet étant en communication fluidique de sortie avec la première chambre de répartition (5) et un second groupe (4b) des ouvertures de sortie de jet étant en communication fluidique de sortie avec la seconde chambre de répartition (6),
- un premier guidage de fluide (7) depuis l'entrée de fluide jusqu'à la première chambre de répartition et un second guidage de fluide (8) depuis l'entrée de fluide jusqu'à la seconde chambre de répartition,
- une vanne de commutation (9) actionnée par l'utilisateur pour libérer de manière contrôlable le premier guidage de fluide et arrêter le second guidage de fluide ou libérer le second guidage de fluide et arrêter le premier guidage de fluide et
- une vanne actionnée par la pression du fluide entre la première et la seconde chambre de répartition, qui prend une position fermée par une pression de fluide dans la première chambre de répartition et une position ouverte par une pression de fluide dans la seconde chambre de répartition,
**caractérisée en ce que**
- la vanne actionnée par la pression du fluide est une vanne à clapet (10) ayant un clapet de vanne (11) rigide monté de manière pivotante qui est disposé dans une zone (13a) d'une paroi de délimitation (13) entre la première et la seconde chambre de répartition (5, 6), zone qui est opposée à une zone d'entrée (14) du second guidage de fluide (8) dans la seconde chambre de répartition.

2. Pomme de douche selon la revendication 1,
**caractérisée en outre par**
- une ouverture de vanne (15), obturable par le clapet de vanne, dans la paroi de délimitation entre la première et la seconde chambre de répartition, et par
- un canal d'admission au clapet (16) qui s'étend de la zone d'entrée dans la seconde chambre de répartition jusqu'à l'ouverture de vanne et qui comprend une paroi de canal (17) tubulaire qui présente au moins une ouverture de sortie latérale (18) vers la seconde chambre de répartition.

3. Pomme de douche selon la revendication 2,
**caractérisée en outre en ce que**
le canal d'admission au clapet présente un rétrécissement (16a) en direction de l'ouverture de vanne.

4. Pomme de douche selon la revendication 2 ou 3,
**caractérisée en outre en ce que**
le canal d'admission au clapet s'étend en ligne droite de la zone d'entrée dans la seconde chambre de répartition jusqu'à l'ouverture de vanne.

5. Pomme de douche selon l'une des revendications 1 à 4,
**caractérisée en outre en ce que**
le clapet de vanne est maintenu en place de façon pivotante sur le corps de pomme de douche par une liaison (19) par clipsage, par enclenchement ou par encliquetage.

6. Pomme de douche selon l'une des revendications 1 à 5,
**caractérisée en outre en ce que**
le clapet de vanne comporte un corps de base de clapet (11a) en matière plastique dure et un corps d'étanchéité (11b) moulé sur le corps de base de clapet et constitué en matière plastique souple, le corps d'étanchéité recouvrant complètement une ouverture de vanne (15) de la vanne à clapet en position fermée du clapet de vanne.

7. Pomme de douche selon l'une des revendications 1 à 6,
**caractérisée en outre en ce que**
la seconde chambre de répartition est réalisée sous la forme d'une chambre annulaire (6a) entourant complètement ou partiellement la première chambre de répartition.

8. Pomme de douche selon l'une des revendications 1 à 7,
**caractérisée en outre par**
- une troisième chambre de répartition (20) dans le corps de pomme de douche, qui est séparée de la première et de la seconde chambre de répartition et avec laquelle un troisième groupe (4c) des ouvertures de sortie de jet est en communication fluidique de sortie, et
- un troisième guidage de fluide (21) depuis l'entrée de fluide jusqu'à la troisième chambre de répartition, qui est séparé du premier et du second guidage de fluide,
- la vanne de commutation étant conçue pour libérer et arrêter de façon contrôlable le troisième guidage de fluide.

9. Pomme de douche selon la revendication 8,
**caractérisée en outre en ce que**
la troisième chambre de répartition constitue une chambre de répartition centrale de la pomme de douche et/ou la première chambre de répartition est réalisée sous la forme d'une chambre annulaire entourant complètement ou partiellement la troisième chambre de répartition.
